# EUROPEAN PATENT SPECIFICATION

(11) **EP 1 872 464 B1**
(45) Date of publication and mention of the grant of the patent: **19.02.2014**
(21) Application number: 06808813.7
(22) Date of filing: 13.04.2006
(51) Int. Cl.: H02K 11/00, H02K 5/22, H02K 7/116

(54) **A PLUG-IN UNIT FOR SUPPLYING AND CONTROLLING AN ELECTRIC MOTOR**
EINSTECKEINHEIT ZUR STROMVERSORGUNG UND STEUERUNG EINES ELEKTRISCHEN MOTORS
FICHE DE CONNEXION POUR ALIMENTER ET CONTRÔLER UN MOTEUR ÉLECTRIQUE

(30) Priority: 14.04.2005 IT BO20050236
(43) Date of publication of application: 02.01.2008
(73) Proprietor: V.S. S.R.L., 40050 Monte S. Pietro (BO) (IT)
(72) Inventor: RABOTTI, Tommaso, I-48100 Ravenna (IT)
(74) Representative: Dall'Olio, Giancarlo
(86) International application number: PCT/IB2006/000865
(87) International publication number: WO 2007/012925

(56) References cited:
- FR-A- 2 593 017
- US-A- 4 943 244
- US-A- 5 984 695
- US-A1- 2001 022 050
- US-A1- 2003 022 554

## Description

### FIELD OF THE INVENTION

The invention relates to a box-like housings, preferably obtained by molding of synthetic or natural material, with embedded therein comb connectors of an electric motor, which operates a suitable mechanism, e.g. a window glass driver used in an automotive vehicle.

### BACKGROUND OF THE INVENTION

According to the prior art, the above mentioned housing receives a plug-in unit, made of plastic material and carrying motor connectors, aimed at coupling mechanically and electrically with the above mentioned comb connectors, and with jacks, which remain outside the unit, and which can be connected to an electric supply source.

An electronic control and adjustment unit, made on a printed circuit board, is electrically interposed between the motor connectors and the jacks.

The European Patent 0.911.949 teaches how to obtain a plug-in module, fitted to a housing of an electrically controlled window operating drive, in which:
- the body of the plug-in module is made of plastic material, with partially incorporated, during the injection process, the above mentioned motor connectors and the jacks;
- the plug body has a seal, for sealing the plug to the mechanism housing, due to the coupling between the plug and housing, and
- a seating for electronic component board;
- the board is inserted into the seating, so as to fasten and center it to and with respect to the plug body, in order to establish a contact between the connector segments, electrically connected to the motor connectors and jacks, and the printed circuit board.

In this Patent, the "housing" includes centering pins and fastening hooks, integrated with the plug body.

Thus, it is necessary to use a mold which defines the above mentioned housings (centering pins, hooks), and a board for printed circuit formed in such a way, as to match with the housings.

Consequently, the solution proposed by the EP 0.911.949 has precarious mechanical seal, committed only to the plastic housings, hooks, centering pins.

US2001022050 discloses a plug-in module for adjusting motors of electric-motor operated window openers, to be used in a motor vehicle, and including: a plastic housing where contact elements are partially embedded, an electronic unit connected to the contact elements, a printed circuit board featuring through seats for receiving the contact elements, a metal flange for supporting the board center, and seal means placed near the flange, able to seal the module.

US4943244 discloses coupling means placed at ends of an electric element connected to an insulative housing, and a printed circuit board exhibiting seats suitable for receiving the coupling means, so that the housing can be coupled with the board.

### SUMMARY OF THE INVENTION

The object of the present invention is to propose a plug-in unit, having motor connectors, jacks and an electronic control and adjustment unit, which can couple with a housing containing a mechanism, operated by an electric motor, whose comb connectors can be inserted between said motor connectors, and which can be obtained by different fitting steps, with respect to the above mentioned prior art, due to the new and original conformation of the components.

Another object of the present invention is to propose a unit, in which the portion of the body, which carries the motor connectors is particularly resistant to mechanical stresses.

A further object of the present invention is to propose a unit, whose body integrates electric components, cooperating functionally with the electronic unit.

The above mentioned objects are obtained, in accordance with the contents of the claims, by a plug-in unit for supplying and controlling an electric motor, when such unit is inserted in a housing carrying comb connectors of said motor, the plug-in unit including:
on one side, motor connectors for coupling with said comb connectors;
on another side, jacks for connecting to an electric supply source;
an electronic unit connected to connection segments, connected electrically to said motor connectors and jacks;
the plug-in unit being characterized in that:
   said plug-in unit has a body made of plastic material and including said motor connectors and jack connectors partially embedded;
   seal means are integrated with said body to seal the plug-in unit while being introduced into said housing;
   said electronic unit is carried by a printed circuit board featuring through seats for receiving free ends of said connection segments;
   at least one of said free ends keeps said board centered with respect to the plug-in unit body, due to the coupling with one of said seats made in the board, to facilitate introduction of the remaining ends of said connection segments into corresponding seats, for subsequent welding of said connection segments to said seats..

### BRIEF DESCRIPTION OF THE DRAWINGS

The characteristic features of the invention are pointed out in the following, with a particular reference to the enclosed drawings, in which:

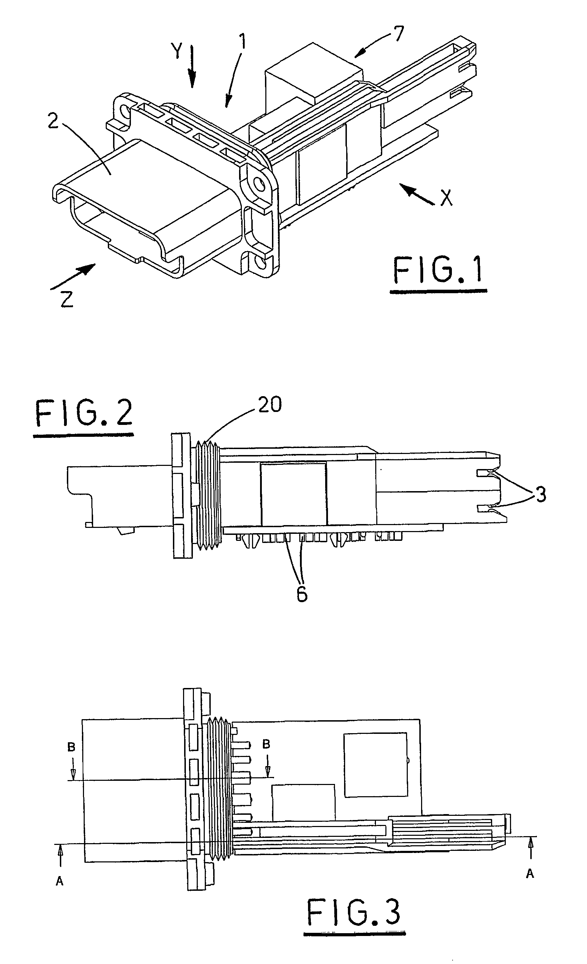

- Figure 1 is a perspective view of the plug-in unit proposed by the present invention;
- Figures 2, 3 and 4 show the plug-in unit as seen according to the arrows X, Y, Z of Figure 1;
- Figure 5 is a further view of the unit;
- Figure 6 is a section view, taken along A - A of Figure 3;
- Figure 7 is a section view, taken along B - B of Figure 3;
- Figure 8 is an enlarged view of the particular C of Figure 6.

### DETAILED DESCRIPTION OF THE PREFERRED EMBODIMENTS

Having regards the above Figures, the reference numeral 1 indicates the plug-in unit, proposed by the present invention.

The unit includes a body 2, of plastic material, with partially embedded therein motor connectors 3 on one side, and jacks 4 on the other side.

As it is known, the motor connectors 3 are aimed at coupling with corresponding comb connectors (not shown) of an electric motor, carried by a case (likewise not shown), into which the unit 1 can be inserted.

As it is known, the jacks 4 can be connected to an electric supply source.

The jacks 4 are electrically connected to corresponding electric connector segments 4A; the motor connectors 3 end with corresponding electric connector segments 3A.

Seal means 20 are provided on the body 2 to seal the unit with respect to the housing, in which it is inserted.

The reference numeral 5 indicates a printed circuit board, which carries components 6 (on one or both of its sides) of an electronic control and adjustment unit 7.

An electric shunt 8, shaped as an arc or a parallelepiped, cooperates functionally with the electronic unit and is embedded in the portion 2A of the body 2, in which the motor connectors 3 are also partially embedded.

The ends of the shunt form corresponding hook means 9, including e.g. two plates 9A, which are situated side by side and whose outer parts have teeth 9B.

The hook means 9 act also as connection electric segments.

Through seats 13A, 14A, 19A, made in the board 5, couple with the free ends of the connection electric segments 3A, 4A, 9, associated to the motor connectors 3, jacks 4, and hook means 9, respectively.

Due to the coupling of the connection segments with the relative seats, the teeth 9B of the plates get in contact with the surfaces of the relative seats 19A: this makes the plates move close to each other, allowed by elastic bending.

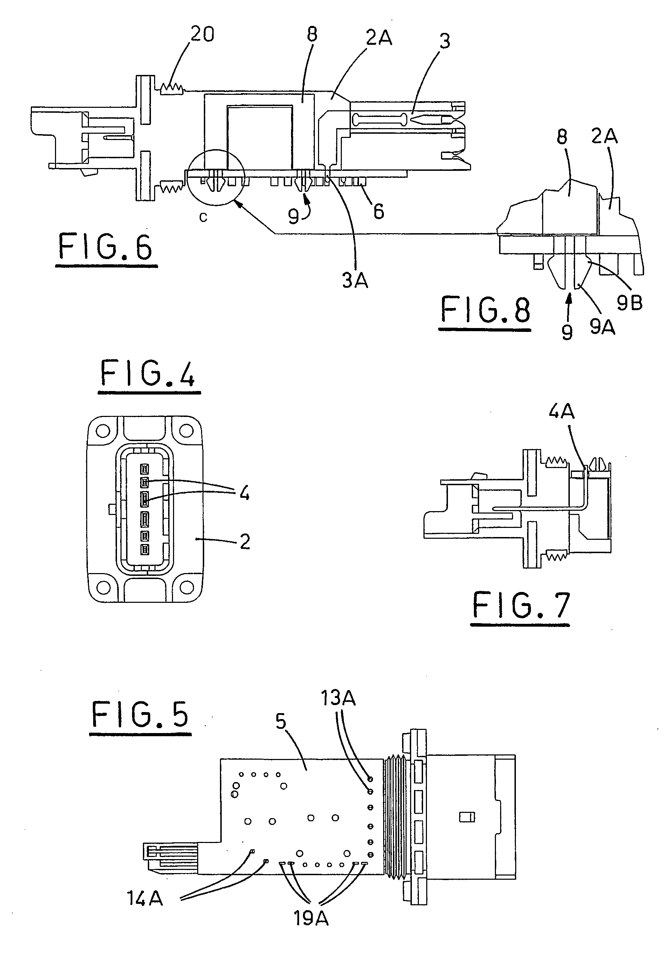

The plates remain close to each other until the teeth pass beyond the seats 19A, which makes the plates move far from each other and stabilizes the coupling (Figure 8).

The hook means 9 can have any shape: what is shown in the Figures is only an embodiment example.

The coupling of the hook means 9 with the relevant seats 19A, allows to center the board 5 with respect to the body, as well as to fasten the board thereto.

This technical-functional aspect is extremely advantageous, because it facilitates the centering of the remaining connection segments 3A, 4A in the relevant seats 13A, 14A, which allows to weld the connection segments, and the hook means 9, to the circuit printed on the board.

In the shown example, the hook means 9 are formed at the ends of the shunt 8.

The hook means can be formed also in the connection segments 3A of the motor connectors 3, or in the connection segments 4A of the jacks, or in both.

According to a varient which is however not the object of the present invention the hook means can be formed only in the connection segments 3A of the motor connectors 3, or in the connection segments 4A of the jacks, or in both.

Although the shown example considers two hook means 9, it is understood that the number of the hook means can be different from two.

According to an embodiment of what has been described and illustrated above, the coupling between the free ends of the connection segments 3A, 4A, 9 and the relevant seats is obtained by interference of at least one of the ends and the relevant seat.

This allows a simpler conformation of the hook means, since it is sufficient to have the section of the connection segments ends similar to the section of the corresponding seat, but bigger.

Consequently, the hook means allow to center the card with respect to, and at the same time, to fasten it, to the body 2.

This operation precedes the welding of connection segments to the printed circuit.

It is to be pointed out that the proposed solution does not include means for centering and/or hooking the boards formed by the body 2, since this function is fulfilled by the connection segments aimed at being electrically connected to the circuit printed on the board.

In the shown example, the centering and fastening means are the ends of an electric component, which cooperates functionally with the electronic unit 7, but which is also embedded in the portion 2A, to which the motor connectors 3 are fastened.

This allows to strengthen this portion, whose resistance to the mechanical stresses is considerably increased with respect to prior art, which is particularly advantageous, since the portion 2A is stressed during the coupling between the motor connectors 3 and the comb connectors of the corresponding electric motor.

## Claims

1. A plug-in unit for supplying and controlling an electric motor, when such unit is inserted in a housing carrying comb connectors of said motor, the plug-in unit including:
on one side, motor connectors (3) for coupling with said comb connectors;
on another side, jacks (4) for connecting to an electric supply source;
an electronic unit (7) connected to connection segments (3A, 4A), connected electrically to said motor connectors (3) and jacks (4);
wherein:
said plug-in unit (1) has a body (2) made of plastic material and including said motor connectors (3) and jack connectors (4) partially embedded;
seal means (20) are integrated with said body (2) to seal the plug-in unit (1) while being introduced into said housing; and
said electronic unit (7) is carried by a printed circuit board (5) featuring through seats (13A, 14A, 19A) for receiving free ends of the connection segments (3A, 4A, 9);
the plug-in unit (1) being **characterized in that**:
at least one of said free ends (9) keeps said board (5) centered with respect to the plug-in unit body, due to the coupling with one of said seats (19A) made in the board, to facilitate introduction of the ends of the remaining connection segments (3A, 4A) into corresponding seats (13A, 14A), for subsequent welding of said connection segments to said seats; and **in that**
it comprises an electric component (8), acting as a shunt, cooperating functionally with said electronic unit (7), wherein said arc-like shunt (8) is embedded in the body (2) and its ends form as many electric segments, one (9) of which forms the end for centering the board (5) with respect to the body (2).

2. A plug-in unit, as claimed in claim 1, wherein two of said free ends (9) of the arc-like shunt (8) are used for centering the board (5) with respect to the body (2) of the unit, due to the coupling of said ends with the seats (19A) made in the board.

3. A plug-in unit, as claimed in claim 1, wherein said end of the shunt forms hook means (9) for fastening the board to the body.

4. A plug-in unit, as claimed in claim 2 , wherein the two ends of said shunt form corresponding hook means (9) for fastening the board to the body.

5. A plug-in unit, as claimed in claim 1, wherein said free end (9), centering said board (5) with respect to the body of the unit is formed in such a way, as to obtain an interference coupling with the relative seat made in the board.

6. A plug-in unit, as claimed in claim 2, wherein the two free ends of the arc-like shunt (8), centering said board (5) with respect to the body of the unit are formed in such a way, as to obtain an interference coupling with the relative seats made in the board.

## Patentansprüche

1. Einsteckeinheit zur Stromversorgung und Steuerung eines elektrischen Motors, wenn diese Einheit in einem Gehäuse eingesetzt ist, das die Kammverbinder des Motors trägt, wobei die Einsteckeinheit Folgendes beinhaltet:
auf einer Seite, Motorsteckverbinder (3) zur Verbindung mit den Kammverbindern;
auf der anderen Seite, Stecker (4) zur Verbindung mit einer elektrischen Versorgungsquelle;
eine Elektronikeinheit (7), die mit Kontaktsegmenten (3A, 4A) verbunden ist, die elektrisch mit den Motorsteckverbindern (3) und den Steckern (4) verbunden sind;
worin:
die Einsteckeinheit (1) einen aus Kunststoff hergestellten Körper (2) aufweist, in dem die Motorsteckverbinder (3) und Stecker (4) teilweise eingebettet sind;
Abdichtmittel (20) in dem Körper (2) integriert sind, die dazu bestimmt sind, die Einsteckeinheit (1) bei ihrem Einsetzen in das Gehäuse abzudichten; und
die Elektronikeinheit (7) von einer Leiterplatte (5) getragen wird, die Durchgangsaufnahmen (13A, 14A, 19A) zur Aufnahme der freien Enden der Kontaktsegmente (3A, 4A, 9) aufweist;
wobei die Einsteckeinheit (1) **dadurch gekennzeichnet ist, dass**:
zumindest eines der freien Enden (9) dazu dient, die Leiterplatte (5) relativ zu dem Körper der Einsteckeinheit zu zentrieren, indem es in Eingriff mit einer der in der Leiterplatte ausgeführten Aufnahmen (19A) tritt, um die Einführung der Enden der verbleibenden Kontaktsegmente (3A, 4A) in die entsprechenden Aufnahmen (13A, 14A) zu erleichtern, bevor die Kontaktsegmente an die Aufnahmen gelötet werden;
und dadurch, dass
sie eine elektrische Komponente (8) beinhaltet, die als "Shunt" (niederohmiger elektrischer Widerstand) wirkt und funktional mit der Elektronikeinheit (7) zusammenwirkt, wobei der bogenförmige Shunt (8) in den Körper (2) eingebettet ist und seine Enden ebenso viele elektrische Segmente bilden, von denen eines (9) das genannte Ende zur Zentrierung der Leiterplatte (5) relativ zum Körper (2) bildet.

2. Einsteckeinheit nach Anspruch 1, worin zwei der freien Enden (9) des bogenförmigen Shunts (8) dazu dienen, die Leiterplatte (5) relativ zu dem Körper (2) der Einsteckeinheit zu zentrieren, indem diese Enden in Eingriff mit den in der Leiterplatte ausgeführten Aufnahmen (19A) treten.

3. Einsteckeinheit nach Anspruch 1, worin das Ende des Shunts Hakenmittel (9) zur Befestigung der Leiterplatte an dem Körper bildet.

4. Einsteckeinheit nach Anspruch 2, worin die zwei Enden des Shunts entsprechende Hakenmittel (9) zur Befestigung der Leiterplatte an dem Körper bilden.

5. Einsteckeinheit nach Anspruch 1, worin das freie Ende (9), das zum Zentrieren der Leiterplatte (5) relativ zum Körper der Einheit dient, derart geformt ist, dass eine ineinandergreifende Verbindung mit der entsprechenden, in der Leiterplatte ausgeführten Aufnahme erhalten wird.

6. Einsteckeinheit nach Anspruch 2, worin die zwei freien Enden des bogenförmigen Shunts (8), die zum Zentrieren der Leiterplatte (5) relativ zum Körper der Einheit dienen, derart geformt sind, dass eine ineinandergreifende Verbindung mit den entsprechenden, in der Leiterplatte ausgeführten Aufnahmen erhalten wird.

## Revendications

1. Une fiche de connexion pour alimenter et contrôler un moteur électrique, quand ladite fiche est insérée dans un boîtier portant les connecteurs à peigne dudit moteur, ladite fiche de connexion comprenant:
d'un côté, des connecteurs moteur (3) destinés à s'accoupler avec lesdits connecteurs à peigne;
de l'autre côté, des prises jack (4) destinées à être reliées à une source d'alimentation électrique;
une unité électronique (7) reliée à des segments de connexion (3A, 4A), électriquement reliés auxdits connecteurs moteur (3) et auxdites prises jack (4) ;
où :
ladite fiche de connexion (1) a un corps (2) réalisé en matière plastique et comprenant lesdits connecteurs moteur (3) et lesdites prises jack (4) partiellement imbriqués ;
des moyens d'étanchéité (20) sont intégrés audit corps (2) pour sceller la fiche de connexion (1) suite à son introduction dans ledit boîtier ; et
ladite unité électronique (7) est portée par une carte de circuit imprimé (5) présentant des logements débouchants (13A, 14A, 19A) pour recevoir les extrémités libres des segments de connexion (3A, 4A, 9) ;
la fiche de connexion (1) étant **caractérisée en ce que** :
au moins une desdites extrémités libres (9) maintient ladite carte (5) centrée par rapport au corps de la fiche de connexion, en raison de l'accouplement d'un desdits logements (19A) réalisé dans la carte, pour faciliter l'introduction des extrémités des autres segments de connexion (3A, 4A) dans des logements (13A, 14A) correspondants, pour le soudage successif desdits segments de connexion auxdits logements ; et **en ce que**
elle comprend un composant électrique (8), agissant comme un shunt, coopérant fonctionnellement avec ladite unité électronique (7), où ledit shunt (8) en forme d'arc est imbriqué dans le corps (2) et ses extrémités forment autant de segments électriques, dont l'un (9) définit l'extrémité de centrage de la carte (5) par rapport au corps (2).

2. La fiche de connexion selon la revendication 1, dans laquelle deux desdites extrémités libres (9) du shunt (8) en forme d'arc sont utilisées pour centrer la carte (5) par rapport au corps (2) de la fiche, en raison de l'accouplement desdites extrémités avec les logements (19A) réalisés dans la carte.

3. La fiche de connexion selon la revendication 1, dans laquelle ladite extrémité du shunt forme des moyens à crochet (9) pour fixer la carte au corps.

4. La fiche de connexion selon la revendication 2, dans laquelle les deux extrémités dudit shunt forment des moyens à crochet (9) correspondants pour fixer la carte au corps.

5. La fiche de connexion selon la revendication 1, dans laquelle ladite extrémité libre (9), centrant ladite carte (5) par rapport au corps de la fiche, est conformée de manière à obtenir un accouplement par interférence avec le logement correspondant réalisé dans la carte.

6. La fiche de connexion selon la revendication 2, dans laquelle les deux extrémités libres du shunt (8) en forme d'arc, centrant ladite carte (5) par rapport au corps de la fiche, sont conformées de manière à obtenir un accouplement par interférence avec les logements correspondants réalisés dans la carte.
